# EUROPÄISCHE PATENTSCHRIFT

(11) **EP 0 918 671 B1**
(45) Veröffentlichungstag und Bekanntmachung des Hinweises auf die Patenterteilung: **27.08.2003**
(21) Anmeldenummer: 98941226.7
(22) Anmeldetag: 23.06.1998
(51) Int. Cl.: B60S 1/16, F16H 57/02, F16H 55/24, H02K 7/116

(54) **ELEKTRISCHE ANTRIEBSEINHEIT**
ELECTRIC DRIVE UNIT
UNITE D'ENTRAINEMENT ELECTRIQUE

(30) Priorität: 26.06.1997 DE 19727203; 12.05.1998 DE 19821079
(43) Veröffentlichungstag der Anmeldung: 02.06.1999
(73) Patentinhaber: ROBERT BOSCH GMBH, 70442 Stuttgart (DE)
(72) Erfinder: LAUK, Detlef, D-77871 Renchen (DE); FISCHER, Ernst, D-76593 Gernsbach (DE); KARCHER, Hansjörg, D-77830 Bühlertal (DE); HERP, Jürgen, D-77815 Bühl (DE); HURST, Richard, D-77656 Offenburg (DE)
(86) Internationale Anmeldenummer: DE9801714
(87) Internationale Veröffentlichungsnummer: WO99000278

(56) Entgegenhaltungen:
- DE-A- 3 013 855
- DE-A- 4 419 769
- GB-A- 1 397 295

## Beschreibung

### Stand der Technik

Die Erfindung betrifft eine elektrische Antriebseinheit nach der Gattung des Anspruchs 1. Es ist bereits eine elektrische Antriebseinheit bekannt (DE 44 19 769 A1), bei der ein Schneckenrad auf einer Abtriebswelle gelagert ist. Zur Einstellung eines Achsabstands zwischen einer Ankerwelle des Antriebsmotors wird die Abtriebswelle in einer Exzenterbuchse gelagert. Die Exzenterbuchse ist relativ lang, ohne Abstufungen ausgebildet und im Gehäuse in einer relativ langen, nicht abgestuften, zylindrischen Bohrung durch Preßpassung gehalten. Das Gehäuse mit der Bohrung wird üblicherweise durch Metallgießen hergestellt. Das Ausbilden der relativ langen Bohrung im Gehäuse, die mit genauer Toleranz gefertigt werden muß, um darin in Preßpassung die Exzenterbuchse aufnehmen zu können, erfordert nach dem Gießvorgang des Gehäuses eine intensive Nachbearbeitung, die jedoch bei einer Massenherstellung der Antriebseinheit zu hohen Kosten führt.

Weitere Antriebseinheiten gehen beispielsweise aus der
DE 32 20 191 A1, der DE 32 35 622 A1, der DE 41 16 100 A1 sowie aus der DE 39 30 144 C2 hervor.

Aufgrund der verwendeten Schneckengetriebe können niedrige Drehzahlen des Scheibenwischers und gleichzeitig hohe Drehmomente erreicht werden. Um die an derartige Antriebseinheiten für Scheibenwischer eines Kraftfahrzeugs gestellten Geräuschanforderungen zu erfüllen, muß der Verzahnungseingriff (das Verdrehflankenspiel) unabhängig von Fertigungstoleranzen konstant bleiben. Zur Eliminierung zumindest aber Minimierung von Fertigungstoleranzen muß daher der Achsabstand von Abtriebswelle und Ankerwelle bei der Montage sehr exakt eingestellt werden.

Dies kann beispielsweise durch eine geringfügige Schiefstellung des Ankers geschehen.

Darüber hinaus wird bei bekannten Wischermotoren der Abstand zwischen der Ankerwelle und der Abtriebswelle auch durch austauschbare Schneckenräder, die jeweils einen auf den Achsabstand angepaßten Teilkreisdurchmesser aufweisen, eingestellt. Dabei wird aus einer Mehrzahl von Schneckenrädern mit unterschiedlichem Teilkreisdurchmesser dasjenige Schneckenrad ausgewählt, bei welchem sich ein optimaler Achsabstand zwischen der Ankerwelle mit der auf ihr befestigten Schnecke und der Abtriebswelle mit dem auf ihr befestigten Schneckenrad ergibt.

Ferner werden Schneckenräder mit halbgloboider Verzahnung verwendet, welche auf der Abtriebswelle durch Unterlegen einer oder mehrerer Scheiben höhenverstellbar montierbar sind, wodurch sich der Eingriffsdurchmesser geringfügig verändern läßt und auf einen exakten Abstand zwischen der Schnecke und dem Schneckenrad einstellbar ist. Problematisch hierbei ist, daß zur Montage der Abtriebswelle und des Schneckenrads nicht nur eine Vielzahl von unterschiedlichen Teilen erforderlich sind, beispielsweise mehrere Schneckenräder mit jeweils unterschiedlichem Teilkreisdurchmesser oder mehrere Unterlegscheiben, sondern daß die Montage der Abtriebswelle und des Schneckenrads auch sehr viele Schritte umfaßt und insoweit zeitaufwendig ist.

### Vorteile der Erfindung

Die erfindungsgemäße elektrische Antriebseinheit mit den kennzeichnenden Merkmalen des Anspruchs 1 hat demgegenüber den Vorteil, daß sie einfacher und kostengünstiger herstellbar ist. Insbesondere ist keine Nachbearbeitung des Getriebegehäuses, in dem die Exzenterbuchse z. B. in einem Abtriebsdom gelagert ist und das zumeist ein Metallgußteil ist, erforderlich, da sich durch die abgestufte Ausbildung der Zylinderaußenfläche der Exzenterbuchse, die an ihrer dem Schneckenrad zugewandten Seite einen kleineren Durchmesser aufweist als an ihrer dem Schneckenrad abgewandten Seite, entsprechend abgestufte, kurze Bohrungen im Getriebegehäuse ergeben, die mit enger Toleranz bei einem vorgesehenen Gießverfahren des Getriebegehäuses einfach herstellbar sind, wobei eine besonders einfache Entformung des fertig gegossenen Getriebegehäuses möglich ist.

Durch die in den Unteransprüchen aufgeführten Maßnahmen sind vorteilhafte Weiterbildungen und Verbesserungen der im Anspruch 1 angegebenen Antriebsvorrichtung möglich.

Eine derartige Exzenterbuchse, d. h. eine Buchse, deren Bohrung exzentrisch angeordnet ist, und die zur Einstellung des Achsabstands zwischen der Ankerwelle und der Abtriebswelle verdrehbar und im verdrehten Zustand verdrehsicher montierbar ist, hat den besonders großen Vorteil, daß zusätzliche Teile, wie beispielsweise weitere Schneckenräder oder Unterlegscheiben vollständig entfallen können, wodurch der Materialaufwand reduziert wird, und daß darüber hinaus auch eine sehr einfache, insbesondere auch sehr schnelle Montage möglich ist. Diese erfordert lediglich noch ein Verdrehen der Exzenterbuchse und der in ihr gelagerten Abtriebswelle zur Einstellung eines gewünschten Achsabstands zwischen der Abtriebswelle und der Ankerwelle vor der abschließenden Befestigung der Exzenterbuchse in dieser Position.

Durch die Wahl der Exzentrizität der Innenbohrung können dabei selbst größere Fertigungstoleranzen ausgeglichen werden.

Rein prinzipiell sind die unterschiedlichsten Verdrehmöglichkeiten der Exzenterbuchse im Getriebegehäuse denkbar. Eine vorteilhafte Ausführungsform sieht vor, daß die Exzenterbuchse stufenlos verdrehbar ist. Auf diese Weise läßt sich eine äußerst präzise Einstellung des Achsabstands zwischen der Ankerwelle und der Abtriebswelle vornehmen.

Bei einer anderen vorteilhaften Ausführungsform ist vorgesehen, daß die Exzenterbuchse an ihrer Stirnseite mehrere im gleichen Winkel zueinander versetzte Rastelemente aufweist, die in dazu komplementäre, in dem Getriebegehäuse ausgebildete Rastelemente eingreifen. Durch diese Rastelemente wird nicht nur eine Verdrehbarkeit der Exzenterbuchse in Stufen ermöglicht, sondern durch die im montierten Zustand drehfest ineinander eingreifenden Rastelemente auch gleichzeitig eine Verdrehsicherung realisiert.

Bei einer bevorzugten Ausführungsform, die den meisten Anforderungen genügt, ist vorgesehen, daß die Rastelemente jeweils um Winkel von 30° zueinander versetzt angeordnet sind.

Die Exzenterbuchse selbst kann aus den unterschiedlichsten Materialien bestehen. Insbesondere hinsichtlich einer einfachen Fertigung der Exzenterbuchse ist vorzugsweise vorgesehen, daß die Exzenterbuchse aus Kunststoff besteht.

Die Exzenterbuchse kann so beispielsweise als Spritzgußteil hergestellt werden.

Um insbesondere ein Eindringen von Schmutz in das Lager der Abtriebswelle zu vermeiden, ist bei einer vorteilhaften Ausführungsform vorgesehen, daß an der Stirnseite der Exzenterbuchse eine Dichtlippe angespritzt ist.

Um eine gute Schmierung der Abtriebswelle in der Exzenterbuchse zu gewährleisten, ist vorzugsweise vorgesehen, daß an der Zylinderinnenfläche der Exzenterbuchse Schmiernuten ausgebildet sind.

Um insbesondere einen Einsatz in einem großen Temperaturbereich, der sich beispielsweise von -30°C bis +80°C erstrecken kann und um dabei ein Aufschrumpfen der Exzenterbuchse auf die Abtriebswelle zu verhindern, kann vorgesehen sein, daß sie über ihre gesamte Länge geschlitzt ist.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
Fig. 1 eine Draufsicht auf eine erfindungsgemäße Antriebseinheit bei abgenommenem Getriebedeckel;
Fig. 2 eine Schnittansicht entlang der Linie II-II der Fig. 1;
Fig. 3 eine Schnittansicht eines Getriebegehäuses einer erfindungsgemäßen Antriebseinrichtung;
Fig. 4 eine Unteransicht einer erfindungsgemäßen Antriebseinheit mit eingesetzter Exzenterbuchse;
Fig. 5 eine Draufsicht auf eine Exzenterbuchse;
Fig. 6 eine Schnittansicht der Exzenterbuchse entlang der Linie VI-VI der Fig. 5;
Fig. 7 eine in Fig. 6 mit VII vergrößerte Darstellung einer an der Exzenterbuchse angeordneten Dichtlippe und Fig. 8 unterschiedliche Stellungen einer in einer erfindungsgemäßen Antriebseinrichtung verwendeten Exzenterbuchse zur Lagerung der Abtriebswelle.

### Beschreibung der Ausführungsbeispiele

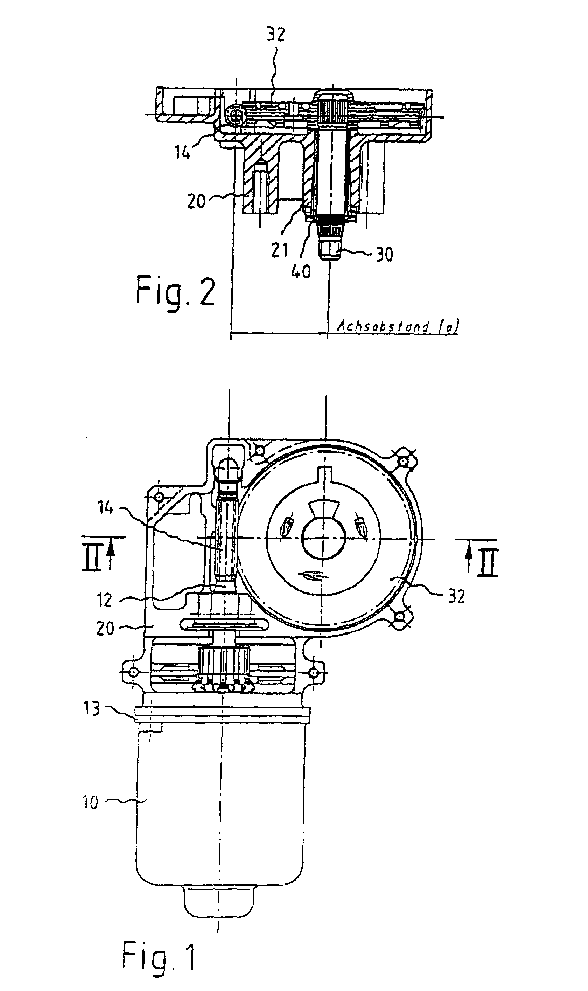

Eine in Fig. 1 und Fig. 2 dargestellte elektrische Antriebseinheit für Scheibenwischer eines Kraftfahrzeugs umfaßt ein im wesentlichen topfförmiges Polgehäuse 10, in dem ein Anker untergebracht ist. Stirnseitig an einem Flansch 13 des Polgehäuses 10 ist ein im wesentlichen ebenfalls topfförmiges Getriebegehäuse 20 befestigt. In dem Getriebegehäuse 20 ist ein auf einer Abtriebswelle 30 befestigtes Schneckenrad 32 angeordnet, welches in eine mit einer Ankerwelle 12 des Ankers verbundene Schnecke 14 eingreift. Dieses Schneckengetriebe aus Schneckenrad 32 und Schnecke 14 ermöglicht die bei einem Wischermotor erforderlichen Drehzahlen und Drehmomente.

Um einen exakten Achsabstand a zwischen der Ankerwelle 12 und damit der Schnecke 14 und der Abtriebswelle 30 und damit des Schneckenrads 32 einstellen zu können, ist die Abtriebswelle 30 in einer Exzenterbuchse 40 gelagert, die in einem Dom 21, der in dem Getriebegehäuse 20 ausgebildet ist, befestigt ist.

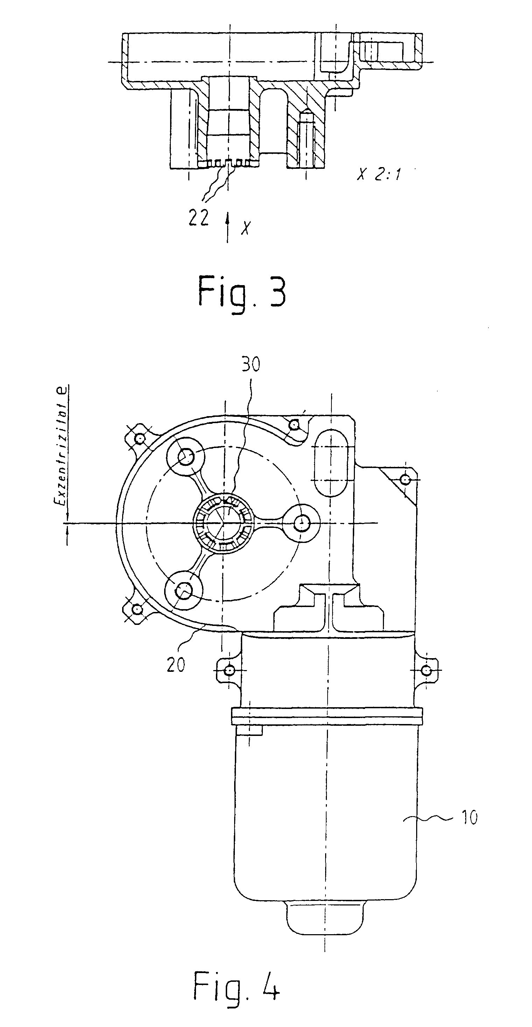

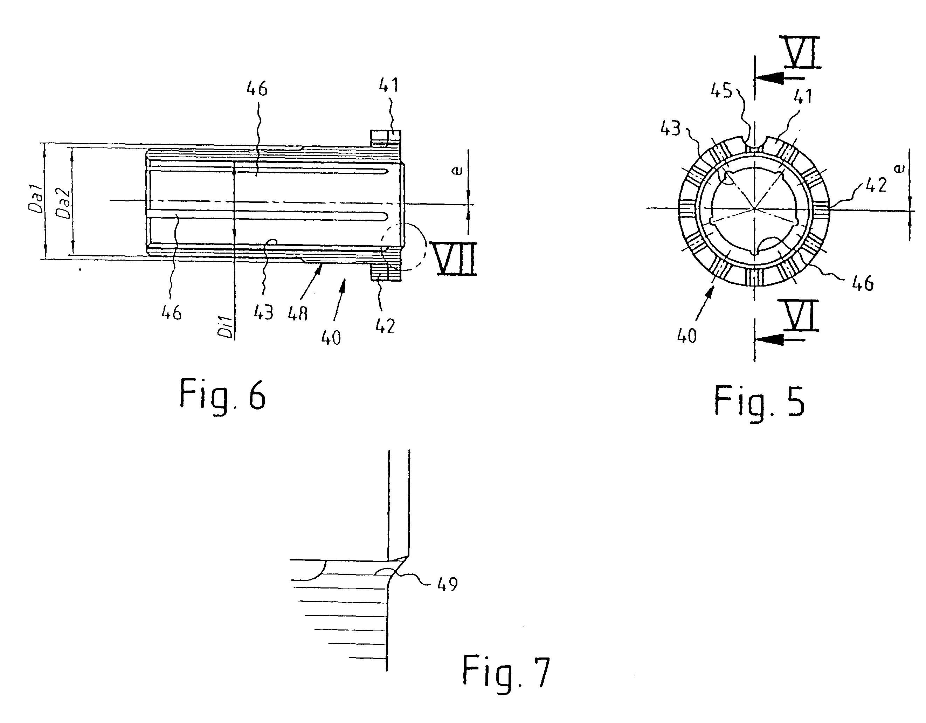

Wie insbesondere aus Fig. 5 und Fig. 6 hervorgeht, weist die Exzenterbuchse 40 an ihrer Stirnseite 41 an einem, an ihrer Stirnseite 41 angeordneten Flansch befestigte, im gleichen Winkel zueinander versetzte Rastelemente 42 auf, die im montierten Zustand in dazu komplementäre, in dem Getriebegehäuse 20 ausgebildete Rastelemente 22 (vergl. Fig. 3) eingreifen (vergl. Fig. 2). Wie insbesondere aus Fig. 5 und Fig. 6 hervorgeht, ist die Innenbohrung 43 oder die Zylinderinnenfläche der Exzenterbuchse 40 exzentrisch (Exzentrizität e) angeordnet.

Im montierten Zustand der Exzenterbuchse 40 in dem Dom 21 führt dies zu einer im Vergleich zur Bohrung in dem Dom 21 mit der Exzentrizität e exzentrisch angeordneten Abtriebswelle 30, wie dies schematisch aus Fig. 4, welche die in dem Getriebegehäuse 20 in der Exzenterbuchse 40 montierte Abtriebswelle 30 zeigt, dargestellt ist.

Durch diese exzentrische Anordnung der Abtriebswelle 30 in dem Getriebegehäuse 20 wird eine präzise Einstellung des Achsabstands a zwischen der Ankerwelle 12 und damit der Schnecke 14 und der Abtriebswelle 30 mit dem Schneckenrad 32 ermöglicht. Dies geschieht dadurch, daß im vormontierten Zustand der Achsabstand a des Schneckenrads 32 und der Schnecke 14 durch schrittweises Verdrehen der Exzenterbuchse 40 im gleichen Winkel eingestellt wird.

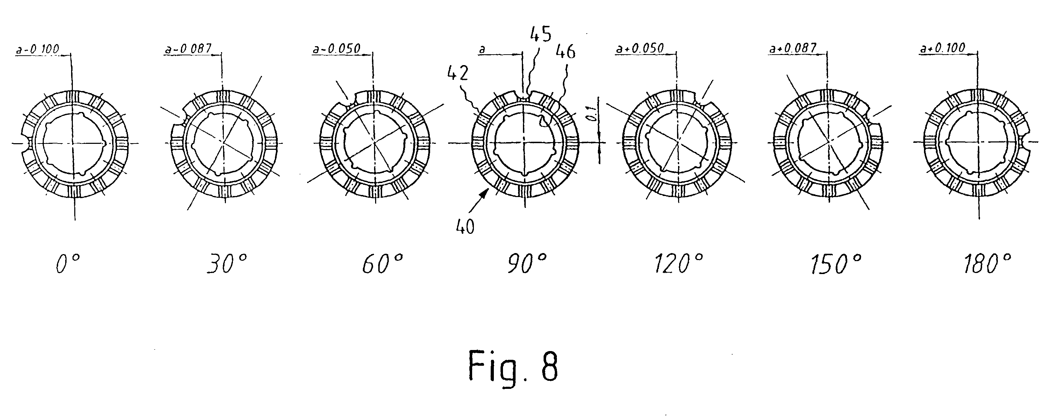

In Fig. 8 sind schematisch verschiedene Stellen der Exzenterbuchse 40 vor ihrer abschließenden Befestigung dargestellt. Wie aus Fig. 8 hervorgeht, kann der Achsabstand a um sehr kleine Beträge durch Drehen der Exzenterbuchse 40 variiert werden. Zur einfachen Erfassung der verdrehten Position der Exzenterbuchse 40 und zur gezielten Montage/Zuführung ist in ihrem stirnseitigen Flansch eine Kerbe 45 vorgesehen.

Wie insbesondere aus Fig. 3, 4, 5 und 8 ersichtlich ist, sind die Rastelemente 42 jeweils um Winkel von beispielsweise 30° zueinander versetzt. Es versteht sich, daß auch andere Winkel in Frage kommen, je nach der geforderten Verstellmöglichkeit und Präzision. Sobald der korrigierte gewünschte Achsabstand a erreicht ist, wird die Exzenterbuchse 40 in dem Dom 21 abschließend befestigt, wobei die Rastelemente 42 der Exzenterbuchse 40 in die an dem Getriebegehäuse 20 angeordneten Rastelemente 22 eingreifen und so eine verdrehsichere Montage der Exzenterbuchse 40 in dem Getriebegehäuse 20 ermöglichen. Durch diese Montage können insbesondere zusätzliche Teile, wie beispielsweise eine Auswahl von leicht unterschiedlichen auf Toleranzen angepaßten Schneckenrädern 32 oder Unterlegscheiben, die eine Lageveränderung des Schneckenrads 32 in Axialrichtung der Abtriebswelle 30 ermöglichen, entfallen.

Die Variation und Einstellung des Achsabstands a und die Montage können außerdem sehr schnell vonstatten gehen.

Die Exzenterbuchse 40 ist vorzugsweise ein Kunststoffteil.

An der Zylinderinnenfläche der Exzenterbuchse 40 sind Schmiernuten 46 vorgesehen, welche eine optimale Schmierung der in der Exzenterbuchse 40 gelagerten Abtriebswelle 30 ermöglichen. Die Exzenterbuchse 40 kann darüber hinaus geschlitzt sein, um ein Aufschrumpfen auf die Abtriebswelle 30 zu verhindern, was wegen des großen Temperaturbereichs, in dem derartige Antriebseinheiten eingesetzt werden, der sich von etwa -30°C bis etwa +80°C erstreckt, und wegen des geringen Lagerspiels auftreten kann.

Wie insbesondere aus Fig. 6 hervorgeht, ist die Zylinderaußenfläche 48 der Exzenterbuchse derart gestuft, daß die Zylinderbuchse 40 an ihrer dem Flansch 41 zugewandten Seite einen größeren Durchmesser aufweist als an ihrer dem Flansch 41 abgewandten Seite (Da1 > Da2). Durch diese Ausbildung der Exzenterwelle 40 wird insbesondere eine Nachbearbeitung des Getriebegehäuses 20, das ein Metallgußteil ist, vermieden. Durch die komplementäre Ausbildung des Abtriebsdoms 21, der ebenfalls einen gestuften Außendurchmesser aufweist, wird eine Entformung von einer Seite des Getriebegehäuses 20 ermöglicht, wodurch eine sehr gute Koaxialität der Bohrung erreicht wird. Der Flansch 41 bildet dabei eine Anlauffläche für das Schneckenrad 32 und stellt dessen Axialbegrenzung dar.

Die Querschnittsverkleinerung der Exzenterbuchse 40 von Da1 auf Da2 ist etwa im Bereich der Mitte der länglichen Erstreckung der Exzenterbuchse 40 vorgesehen. Wie die Fig. 6 zeigt, kann die Querschnittsverkleinerung auch etwas außerhalb der Mitte, näher an dem dem Flansch 41 zugewandten Bereich der Mitte, vorgesehen sein.

Die Exzenterbuchse 40 kann darüber hinaus an ihrer dem Flansch 41 zugewandten Seite eine angespritzte Dichtlippe 49 aufweisen, die ein Eindringen von Schmutz in das Lager der Abtriebswelle 30 verhindert. Diese Dichtlippe 49 ist an der Innenbohrung der Exzenterbuchse 40 angeordnet, springt geringfügig zur Achse der Exzenterbuchse 40 hin vor (vgl. Fig. 7) und liegt im montierten Zustand der Abtriebswelle 30 unter Ausübung einer Andruckkraft an dieser an.

## Patentansprüche

1. Elektrische Antriebseinheit, insbesondere für Scheibenwischer eines Kraftfahrzeugs, umfassend einen Antriebsmotor, mit einem in einem im wesentlichen topfförmigen Polgehäuse (10) untergebrachten Anker, ein stirnseitig an dem Polgehäuse (10) befestigtes Getriebegehäuse (20) zur Aufnahme wenigstens eines auf einer Abtriebswelle (30) gelagerten Schneckenrades (32), das in eine mit einer Ankerwelle (12) des Antriebsmotors verbundene Schnecke (14) eingreift, wobei die Abtriebswelle (30) in einer im Getriebegehäuse (20) angeordneten Exzenterbuchse (40) gelagert ist, die zur Einstellung des Achsabstands (a) zwischen der Ankerwelle (12) und der Abtriebswelle (30) verdrehbar und im verdrehten Zustand verdrehsicher im Getriebegehäuse (20) montierbar ist, wobei die Exzenterbuchse (40) einen von ihrer Zylinderaußenfläche (48) abstehenden Flansch (41) hat, **dadurch gekennzeichnet, daß** die Exzenterbuchse (40) derart gestuft ausgebildet ist, daß sie an ihrer dem Flansch (41) zugewandten Seite einen größeren Durchmesser (Da1) aufweist als an ihrer dem Flansch (41) abgewandten Seite (Da2).

2. Elektrische Antriebseinheit nach Anspruch 1, **dadurch gekennzeichnet, daß** die Exzenterbuchse (40) stufenlos verdrehbar ist.

3. Elektrische Antriebseinheit nach Anspruch 1, **dadurch gekennzeichnet, daß** die Exzenterbuchse (40) mehrere Rastelemente (42) aufweist, die an dem an ihrer Stirnseite ausgebildeten Flansch (41) befestigt sind und im gleichen Winkel zueinander versetzt in dazu komplementär vorgesehene, in dem Getriebegehäuse (20) ausgebildete Rastelemente (22) eingreifen.

4. Elektrische Antriebseinheit nach Anspruch 3, **dadurch gekennzeichnet, daß** die Rastelemente (42 bzw. 22) jeweils um Winkel von 30° zueinander versetzt angeordnet sind.

5. Elektrische Antriebseinheit nach einem der Ansprüche 1 bis 4, **dadurch gekennzeichnet, daß** die Exzenterbuchse (40) aus Kunststoff besteht.

6. Elektrische Antriebseinheit nach Anspruch 5, **dadurch gekennzeichnet, daß** an dem Flansch (41) der Exzenterbuchse (40) eine zur Achse vorspringende Dichtlippe (49) angespritzt ist.

7. Elektrische Antriebseinheit nach Anspruch 5 oder 6, **dadurch gekennzeichnet, daß** an einer Zylinderinnenfläche der Exzenterbuchse (40) Schmiernuten (46) ausgebildet sind.

8. Elektrische Antriebseinheit nach einem der Ansprüche 5 bis 7, **dadurch gekennzeichnet, daß** die Exzenterbuchse (40) über ihre gesamte Länge geschlitzt ist.

9. Elektrische Antriebseinheit nach Anspruch 1, **dadurch gekennzeichnet, daß** die Exzenterbuchse (40) im Getriebegehäuse (20) durch Preßpassung gehalten ist.

10. Elektrische Antriebseinheit nach Anspruch 1, **dadurch gekennzeichnet, daß** die Querschnittsverkleinerung von Da1 auf Da2 der Exzenterbuchse (40) etwa im Bereich der Mitte der länglichen Erstreckung der Exzenterbuchse (40), vorzugsweise etwas außerhalb der Mitte, insbesondere näher an dem dem Flansch (41) zugewandten Bereich der Mitte, vorgesehen ist.

## Claims

1. Electric drive unit, in particular for window wipers of a motor vehicle, comprising a driving motor, with an armature accommodated in an essentially cup-shaped pole casing (10), a gearbox (20) fastened to the end side of the pole casing (10) and intended for accommodating at least one worm wheel (32) which is mounted on an output shaft (30) and engages in a worm (14) connected to an armature shaft (12) of the driving motor, the output shaft (30) being mounted in an eccentric bushing (40) which is arranged in the gearbox (20), can be twisted in order to set the axial distance (a) between the armature shaft (12) and the output shaft (30) and, when twisted, can be fitted in a twist-proof manner in the gearbox (20), the eccentric bushing (40) having a flange (41) protruding from its cylindrical outer surface (48), **characterized in that** the eccentric bushing (40) is of stepped design in such a manner that it has a larger diameter (Da1) on its side facing the flange (41) than on its side (Da2) facing away from the flange (41).

2. Electric drive unit according to Claim 1, **characterized in that** the eccentric bushing (40) can be twisted in an infinitely variable manner.

3. Electric drive unit according to Claim 1, **characterized in that** the eccentric bushing (40) has a plurality of latching elements (42) which are fastened to the flange (41) formed on its end side and, offset at the same angle from one another, engage in latching elements (22) which are provided in a complementary manner to them and are formed in the gearbox (20).

4. Electric drive unit according to Claim 3, **characterized in that** the latching elements (42 and 22) are offset with respect to one another by an angle of 30° in each case.

5. Electric drive unit according to one of Claims 1 to 4, **characterized in that** the eccentric bushing (40) consists of plastic.

6. Electric drive unit according to Claim 5, **characterized in that** a sealing lip (49) projecting towards the axis is injection-moulded onto the flange (41) of the eccentric bushing (40).

7. Electric drive unit according to Claim 5 or 6, **characterized in that** lubricating grooves (46) are formed on a cylindrical inner surface of the eccentric bushing (40).

8. Electric drive unit according to one of Claims 5 to 7, **characterized in that** the eccentric bushing (40) is slit over its entire length.

9. Electric drive unit according to Claim 1, **characterized in that** the eccentric bushing (40) in held in the gearbox (20) by a press fit.

10. Electric drive unit according to Claim 1, **characterized in that** the cross-sectional reduction from Da1 to Da2 of the eccentric bushing (40) is provided approximately in the region of the centre of the elongate extent of the eccentric bushing (40), preferably somewhat outside the centre, in particular closer to that region of the centre which faces the flange (41).

## Revendications

1. Unité d'entraînement électrique, notamment pour l'essuie-glace d'un véhicule automobile, dans laquelle :
- un moteur d'entraînement comprend un induit monté dans un boîtier polaire (10) essentiellement en forme de pot et sur la face frontale duquel est fixé un boîtier d'engrenage (20) pour accueillir au moins une roue tangente (32) montée sur un arbre de sortie (30) et en prise avec une vis (14) reliée à un arbre d'induit (12) du moteur d'entraînement,
- l'arbre de sortie (30) est monté dans une douille à excentrique (40) elle-même montée dans le boîtier d'engrenage (20),
- la douille à excentrique (40), pour régler l'entr'axes (a) entre l'arbre d'induit (12) et l'arbre de sortie (30) peut tourner et être bloquée en rotation dans le boîtier (20), cette douille présentant une bride (41) en saillie sur sa surface cylindrique externe (48),
**caractérisée en ce que**
la douille à excentrique (40) présente un gradin de sorte que le diamètre Da1 de sa partie située du côté de la bride est plus grand que le diamètre Da2 de la partie éloignée de la bride.

2. Unité d'entraînement électrique selon la revendication 1,
**caractérisée en ce que**
la douille à excentrique (10) peut tourner en continu.

3. Unité d'entraînement électrique selon la revendication 1,
**caractérisée en ce que**
la douille à excentrique (40) présente plusieurs éléments d'arrêt (42) fixés à la bride (41) qu'elle porte frontalement, espacés entre eux d'un même angle et en prise avec des éléments d'arrêt (22) complémentaires correspondants, prévus dans le boîtier d'engrenage (20).

4. Unité d'entraînement électrique selon la revendication 1,
**caractérisée en ce que**
les éléments d'arrêt (42 et 22) sont décalés entre eux de 30°.

5. Unité d'entraînement électrique selon l'une quelconque des revendications 1 à 4,
**caractérisée en ce que**
la douille à excentrique est en matière plastique.

6. Unité d'entraînement électrique selon la revendication 5,
**caractérisée en ce que**
sur la bride (41) de la douille à excentrique (40) est injectée une lèvre d'étanchéité (49) faisant saillie en direction de l'axe.

7. Unité d'entraînement électrique selon l'une quelconque des revendications 5 ou 6,
**caractérisée en ce que**
dans la surface cylindrique interne de la douille à excentrique (40) sont creusées des rainures de lubrification (46).

8. Unité d'entraînement électrique selon l'une quelconque des revendications 5 à 7,
**caractérisée en ce que**
la douille à excentrique (40) est fendue sur toute sa longueur.

9. Unité d'entraînement électrique selon la revendication 1,
**caractérisée en ce que**
la douille à excentrique (40) est maintenue dans le boîtier d'engrenage (20) par ajustage serré.

10. Unité d'entraînement électrique selon la revendication 1,
**caractérisée en ce que**
la réduction de section de la douille à excentrique (40), pour passer du diamètre Da1 au diamètre Da2, est prévue à peu près au milieu de la longueur de la douille, de préférence un peu à l'écart de ce milieu, notamment plus près de la bride (41).
